Europäisches Patentamt

European Patent Office

Office européen des brevets

(19)

(11) Publication number: **0 028 871**
**A1**

(12) **EUROPEAN PATENT APPLICATION**

(21) Application number: **80301639.3**

(22) Date of filing: **19.05.80**

(51) Int. Cl.³: **C 04 B 13/00**
**C 04 B 41/32, C 04 B 7/26**

(30) Priority: **13.11.79 FI 793554**

(43) Date of publication of application:
**20.05.81 Bulletin 81/20**

(84) Designated Contracting States:
**AT BE CH DE FR GB LI NL SE**

(71) Applicant: **OY PARTEK AB**

**SF-21600 Pargas(FI)**

(72) Inventor: **Lindholm, Karl Allan Victor**
**Jonsängsvägen 10**
**SF-21600 Pargas(FI)**

(72) Inventor: **Hermansson, Reijo Olavi**
**Kanelgränd**
**SF-21600 Pargas(FI)**

(74) Representative: **Collier, Jeremy Austin Grey et al,**
**J.A.Kemp & Co. 14, South Square Gray's Inn**
**London WC1R 5EU(GB)**

(54) Smoothing composition in dry and wet form containing hydrated calcium sulphate and cement and a method of applying the wet composition to a floor or wall.

(57) In the smoothing of floors and walls with a smoothing plaster it has been a problem that extensive shrinking occurs on drying to such an extent that cracking and detachment of the smoothing layer from the base surface occurs. To counteract this problem, the invention provides a composition comprising hydrated calcium sulphate, especially $CaSO_4.1/2 H_2O$, cement and fly ash, in a weight ratio of 1:5-25:5-20 respectively, as bonding agents, aggregate, especially fine sand, and an agent for retarding reaction of the bonding agent. The invention includes this composition in dry and wet forms and its application to floors and walls.

EP 0 028 871 A1

Croydon Printing Company Ltd.

"SMOOTHING COMPOSITION IN DRY AND WET FORM CONTAINING
HYDRATED CALCIUM SULPHATE AND CEMENT AND A METHOD OF
APPLYING THE WET COMPOSITION TO A FLOOR OR WALL"

The present invention relates to a surface treatment
composition, which is intended for smoothing floor and
wall surfaces and of the kind which contains cement, fly
ash and gypsum as bonding agents, and aggregate. Water
is added to such a composition to produce desired
consistency for application to the surface.

The term "gypsum" is used generically in this specification
to mean hydrated calcium sulphate, of which $CaSO_4 . 1/2 H_2O$
and $CaSO_4 . 2H_2O$ are examples.

In modern construction, a great deal of concrete is used
for the production of both walls and floors. However, the
concrete surface obtained is not sufficiently smooth for
the attachment of the final wall or floor covering. For this
reason, the unevenness of the surface has to be eliminated
using various smoothing and finishing plasters.

There is known a finishing mix, based on an anhydrite bonding
agent, used for smoothing floor surfaces; in addition to the
anhydrite bonding agent it contains an accelerator ($K_2SO_4$),
a methyl hydroxy-ethyl cellulose which retards setting, a
surfactant, and a resin modified with sulfite or sulfonic
acid and based on an amino-s-triazine containing at least
two $NH_2$ groups, in which case, by adding water (0.17-0.5
parts by

weight, calculated on the basis of the weight of the anhydrite
bonding agent), a self-leveling mix is obtained, which spreads
fluidly before setting so that a smooth surface is obtained.
This known mix can also contain other additives which improve
the properties and fluidity of the mix, such as surfactants,
a defoaming agent, and the like.

Cement-based smoothing plasters are also known. They have a
disadvantage in that they shrink upon hydration and shrink
extensively upon drying, which is due to the fact that a large
amount of water must be used, especially in plasters intended
for smoothing floors, in order to obtain a readily fluid
plaster. The shrinkage upon drying easily increases to such a
degree that cracking and detachment from the base occur in the
surface treatment plaster.

Attempts have been made to eliminate the disadvantages due
to the extensive shrinkage upon drying by using in such
smoothing mixes relatively large quantities of dispersions
made from plastics such as polyvinyl acetate or acrylic polymer,
or other organic additives, the purpose of which is to lower
the elasticity coefficient of the set mix and thereby reduce
the tendency of the mix to crack and become detached from the
base. However, by using these admixtures it has not been possible
to reduce the shrinkage upon drying, but only to reduce its
effects. Also, in addition to being expensive these known
additives have an adverse effect in that they reduce the
fluidity of the mix and thereby complicate working with the
mix.

The object of the present invention is, therefore, to provide
a surface treatment composition the drying shrinkage of which
has at least in part been compensated for in such a manner that
the shrinkage upon drying after the setting of the mix is so
insignificant that no cracking of the coating or detachment
from the base occurs, the properties of the surface treatment
composition being easily variable to suit other applications.

According to the invention, this problem has been solved as follows: in order to produce expansion which at least in part compensates for the shrinkage upon drying of the surface treatment composition disclosed in the preamble, the composition comprises gypsum (hereinbefore defined, preferably $CaSO_4 \cdot 1/2 H_2O$), cement, preferably a Portland cement, and fly ash bonding agents in the weight 1:5-25:5-20, respectively, aggregate, preferably fine sand, and an agent which retards reaction of the bonding agents, preferably a protein agent, e.g. casein or bone glue. The invention includes such a composition in dry or wet form and it also includes a method of smoothing the surface of a floor or wall by applying a smoothing layer of the wet composition thereto, preferably by pumping, and then allowing it to dry.

An advantageous concentration of protein is generally 0.2-1.5 % by weight, calculated from the total dry matter of the composition. The preferred proportion of gypsum is about 3% by weight, on the same basis.

One preferred composition according to the invention, intended for smoothing floor surfaces is characterised in that it contains 20-50 % by weight of cement, 20-40 % by weight of fly ash, 2-5 % by weight of gypsum, and 25-55 % by weight of aggregate, preferably fine sand, calculated from the total dry matter of the composition, the reaction velocity retarder being casein.

Another preferred composition according to the invention, intended for smoothing wall surfaces, is characterized in that it contains 10-40 % by weight of cement, 10-40 % by weight of fly ash, 1-5 % by weight of gypsum, and 40-75 % by weight, of aggregate preferably fine sand, calculated from the total dry matter of the composition, the reaction velocity retarder being bond glue.

The composition according to the invention can also
contain admixtures which improve the properties of
the composition.  Thus the composition can contain a
water retainer such as a cellulose derivatives, its
concentration being preferably 0.01-0.5 % by weight,
calculated from the total dry matter of the composition.

Furthermore, the composition can contain a defoaming
agent, the concentration of which is preferably
0.01-0.5 % by weight, calculated from the total dry
matter of the composition.

In addition, the composition can contain an agent which improves
adhesion, e.g. a polyvinyl acetate-based polymer, the concentration of which is preferably 0.5-5 % by weight, calculated
from the total dry matter of the composition.

Further, the composition can also contain an agent such as
urea which improves the fluidity, preferably at a concentration
of 0.5-1.5 % by weight, calculated from the total dry matter
of the composition.

Usually when the agent for retarding the reaction
velocity is a protein, the total proportion of protein
and additive(s), especially those mentioned above, is
from 2 to 3% by weight, calculated from the total dry
matter of the composition.

The present invention is based on the idea that by using a certain ratio of gypsum to fly ash and by retarding the reactions of the bonding agents, a product is obtained in which slow expansion occurs, compensating at least in part for the normal shrinkage upon drying. Thus the surface treatment composition according to the invention is suitable for smoothing indoor building surfaces in which the drying is relatively rapid and the equilibrium moisture of the mix stabilizes at a level required by the environment.

It is a known method to mix fly ash and gypsum with cement, whereby a mixture is obtained which sets after the addition of water and has expansive properties. According to the theories of conventional concrete technology, however, the ratios of cement, fly ash and gypsum according to the present invention have never been used, since in massive structures such a mix would continue expanding and would easily exceed the maximum values set for the expansion of concrete structures.

The surface treatment composition according to the invention is highly applicable to the smoothing of concrete floors before the attachment of the final covering. As known, a large quantity of water is used in such compositions in order to obtain good fluidity, in order that the applied mix spread as a sufficiently smooth surface. The composition according to the invention can be applied by pumping to the floor surface to be smoothed, and the mix spreads, forming a completely smooth surface. In spite of the high concentration of water in the mix, its post-setting shrinkage upon drying is so insignificant that no cracks or detachment from the floor
surface occur in the smoothing coat.

However, if previously known cement-based surface treatment
compositions and the same pumping technique are used, there
is the risk that, as a result of the great shrinkage upon
drying, the smoothing coat cracks and becomes detached from
the floor surface.

The following examples are given to illustrate the invention.
All proportions are by weight.

Example 1

The following series of experiments was performed to show the
expansion effect obtained using a surface treatment composition according to the invention, compared with other compositions. 4 different compositions were prepared, their
constituents being given below; No. 1 (no gypsum), No. 2
(fly ash:gypsum ratio greater than 20:1) and No. 4 (cement:
gypsum and fly ash:gypsum ratios both less than 5:1) are the
comparative compositions.

|                                        | 1     | 2     | 3     | 4     |
|----------------------------------------|-------|-------|-------|-------|
| Portland cement                        | 20    | 20    | 20    | 20    |
| Fly ash                                | 23    | 23    | 23    | 23    |
| $CaSO_4$ 1/2 $H_2O$                    | 0     | 1     | 3     | 5     |
| Sand 0-0.6 mm                          | 54.32 | 53.32 | 51.32 | 49.32 |
| Casein and other admixtures            | 2.64  | 2.64  | 2.68  | 2.68  |
| Water (%, calculated from total dry matter) | 20.00 | 20.00 | 20.00 | 20.00 |

Prisms of 25 x 25 x 250 mm were made from the compositions;
they were allowed to set in molds for 48 h. After the dismantling
of the molds, metallic measuring points were glued to the
experimental prisms and the initial value was immediately
measured for the prism length. Thereafter, the specimens were
placed in +20 °C water and the changes in length were measured
daily. The results are given in Table 1.

### Table 1

| Retention time | Deformation $\Delta l$ o/oo | | | |
|---|---|---|---|---|
| | Composition | Composition | Composition | Composition |
| days | 1 | 2 | 3 | 4 |
| 1 | +0.45 | +0.40 | +0.63 | +0.48 |
| 3 | +0.51 | +0.75 | +1.30 | +0.83 |
| 7 | +0.56 | +1.50 | +3.00 | +1.75 |
| 15 | +0.59 | +1.78 | +4.80 | +2.82 |
| 30 | +0.60 | +1.82 | >+5.75 | +4.75 |

Table 1 illustrates the fact that the proportioning of the various constituents of the mixture can be optimized according to the invention , as shown by experiment 3.

Example 2

A plaster composition according to the invention, intended for use as a readily fluid mix for the smoothing of a floor surface, and a known plaster composition for the same purpose were prepared. An analysis of these compositions is given below. The water quantity used for the mixes was selected so that each mix had the same viscosity after mixing.

To compare the shrinkage upon drying, prisms of 25 x 25 x 250 mm were cast from each plaster. The molds were removed after 2 days, and metallic measuring points were glued to the prisms. The distance between the points was measured immediately in order to obtain the initial value. Thereafter, the specimen prisms were kept in an air-conditioned room, at 65 % RH and 22 $^\circ$C, and the deformations of the prisms were measured daily. The results are given below in Table 2.

| | A<br>Composition according to the invention | B<br>Known composition |
|---|---|---|
| Portland cement | 20.00 | 20.00 |
| Fly ash | 23.00 | – |
| $CaSO_4$ 1/2 $H_2O$ | 3.00 | 5.00 |
| Limestone powder 0-0.6 mm | – | 23.00 |
| Aluminate cement | – | 0.50 |
| Sand 0-0.6 mm | 51.32 | 48.82 |
| Casein and additives improving fluidity | 2.68 | 2.68 |
| Water (%, calculated from total dry matter) | 20.00 | 26.00 |

### Table 2

| Retention time<br>d | Deformation Δ l o/oo<br>Composition according to the invention | Known composition |
|---|---|---|
| 1 | +0.05 | -0.25 |
| 3 | ±0.00 | -0.75 |
| 7 | -0.25 | -1.05 |
| 15 | -0.41 | -1.34 |
| 30 | -0.48 | -1.38 |

As can be seen from Table 2, the resultant shrinkage of the mix according to the invention is only about one-third that of the known mix.

### Example 3

A mix intended for smoothing floor surfaces, having the following composition:

| | | |
|---|---|---|
| Portland cement | 23.00 | % by weight |
| Fly ash | 33.00 | " |
| $CaSO_4$ 1/2 $H_2O$ | 3.00 | " |
| Sand 0-0.6 mm | 38.22 | " |
| Casein and other additives | 2.68 | " |

By mixing this mix with water a plaster was obtained which could be applied by pumping and which did not crack or become detached from the floor surface.

Example 4

A mix intended for smoothing floor surfaces was prepared, having the following composition:

| | | |
|---|---|---|
| Portland cement | 50.00 | % by weight |
| Fly ash | 20.00 | " |
| $CaSO_4$ 1/2 $H_2O$ | 3.00 | " |
| Sand 0-0.6 mm | 24.32 | - " |
| Casein and other additives | 2.68 | " |

By mixing this mix with water a plaster was obtained which could be applied by pumping and, as a layer of a maximum thickness of 10 mm, did not crack or become detached from the floor surface.

Example 5

A mix intended for smoothing wall surfaces was prepared, having the following composition:

| | | | |
|---|---|---|---|
| Portland cement | | 25.00 | % by weight |
| Fly ash | | 20.00 | " |
| $CaSO_4$ 1/2 $H_2O$ | | 2.00 | " |
| Additive | | 0.90 | " |
| Aggregate | to | 100.00 | " |

The additive contained bone glue 66.7 % by weight and cellulose ether 33.3 % by weight.

By mixing this mix with water a plaster was obtained which was easy to apply to the wall surface and did not crack or become detached from the wall surface.

## Claims

1. A surface treatment composition for use, after addition of water, in smoothing floor and wall surfaces, the composition comprising hydrated calcium sulphate, cement and fly ash as bonding agents, and aggregate, characterised in that the weight ratio of hydrated calcium sulphate: cement: fly ash is 1:5-25:5-20 respectively, and in that the composition also includes an agent for retarding reaction of the bonding agents.

2. A composition according to claim 1 characterised in that the agent for retarding reaction of the bonding agent is a protein, preferably casein or bone glue.

3. A composition according to claim 2 characterised in that it contains 0.2-1.5 % by weight, calculated on the total dry matter of the composition, of the protein.

4. A composition according to claim 2 or 3, intended for smoothing floor surfaces, characterised in that it contains 20-50 % by weight of cement, 20-40 % by weight of fly ash, 2-5 % by weight of hydrated calcium sulphate and 25-55 % by weight of aggregate, all calculated on the total dry matter of the composition, and casein.

5. A composition according to claim 2 or 3 intended for smoothing wall surfaces, characterised in that it contains 10-40 % by weight of cement, 10-40 % by weight of fly ash, 1-5 % by weight of hydrated calcium sulphate, 40-75 % by weight of aggregate, all calculated on the total dry matter of the composition, and bone glue.

6. A composition according to any one of claims 1 to 5 characterised in that the aggregate is fine sand.

7.      A composition according to any one of claims
1 to 6, characterised in that it also contains one or
more of: (a) 0.01-0.5 % by weight of a water-retaining
substance, preferably a cellulose derivative, (b)
0.01-0.5 % by weight of a defoaming agent, (c) 0.5-5 %
by weight of an adhesion-improving agent, preferably
a vinyl acetate-based polymer, and (d) 0.5-1.5 % by
weight of a fluidity-improving agent, preferably urea,
all calculated on the total dry matter of the composition.

8.      A composition according to claim 7 characterised
in that the agent for retarding reaction of the bonding
agent is a protein and the total proportion of the protein
and additive(s) as defined in claim 7 is from 2 to 3%
by weight, calculated on the total dry matter of the
composition.

9.      A composition according to any one of claims 1
to 8 which also contains water.

10.     A method of smoothing the surface of a floor or
wall, characterised in that one applies thereto a smoothing
layer of a composition according to claim 9 and allows it
to dry.

| | EUROPEAN SEARCH REPORT | Application number |
|---|---|---|
| European Patent Office | | EP 80 30 1639 |

## DOCUMENTS CONSIDERED TO BE RELEVANT

| Category | Citation of document with indication, where appropriate, of relevant passages | Relevant to claim |
|---|---|---|
| X | CHEMICAL ABSTRACTS, vol. 90, no. 10, 5th March 1979, page 227, no. 75704z Columbus, Ohio, U.S.A. <br><br> & PL- 86 426 (INSTYTUT TECHNIKI BUDOWLANEJ) 15-11-1976 <br><br> * Abstract * <br><br> -- | 1,4-6, 9 |
| X | DE - A - 2 801 687 (BAUTRANS FI-NANZ) <br><br> * Claims 1,2,4 * <br><br> -- | 1,6,9 |
| X | CHEMICAL ABSTRACTS, vol. 80, no. 20, 20th May 1974, page 233, no. 111903t Columbus, Ohio, U.S.A. L.A. ZAKHAROV: "Expanding composi-tions based on alumina-belite cement" <br><br> & SB. NAUCH. TR., EREVAN. POLI-TEKH. INST. 1971, 34(3), 166-169 <br><br> * Abstract * <br><br> -- | 1,9 |
| | US - A - 4 045 237 (R.W. GAINES et al.) <br><br> * Column 1, lines 7-16; ab-stract * <br><br> -- | 1,7 |
| P,E | GB - A - 2 031 868 (OSAKA CEMENT) <br><br> * Claim 1 * <br><br> -- | 1,9 |
| A | FR - A - 2 391 968 (SOC. DES CI-MENTS FRANCAIS) ./. | |

### CLASSIFICATION OF THE APPLICATION (Int. Cl.³)

C 04 B 13/00
41/32
7/26

### TECHNICAL FIELDS SEARCHED (Int. Cl.³)

C 04 B 13/00
7/00
41/00

### CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 26-01-1981 | DAELEMAN |

EPO Form 1503.1 06.78

| | **DOCUMENTS CONSIDERED TO BE RELEVANT** | | **CLASSIFICATION OF THE APPLICATION (Int. Cl. 3)** |
|---|---|---|---|
| Category | Citation of document with indication, where appropriate, of relevant passages | Relevant to claim | |
| A | US - A - 2 465 278 (F.A. SCHENKER et al.) | | |
| A | GB - A - 1 551 118 (EMESA) | | |
| A | F.M. LEA: "The chemistry of cement and concrete", 3rd edition, Edw. Arnold (Publishers) Ltd., pages 414-422<br><br>  * Page 415, table 50 - page 422, table 71 * | | |
| | ---- | | **TECHNICAL FIELDS SEARCHED (Int. Cl. 3)** |

EPO Form 1503.2   06.78